# EUROPÄISCHE PATENTANMELDUNG

(11) **EP 2 273 633 A2**
(43) Veröffentlichungstag der Anmeldung: **12.01.2011**
(21) Anmeldenummer: 10167027.1
(22) Anmeldetag: 23.06.2010
(51) Int. Cl.: H02B 1/30

(54) **Anordnung zum Verbinden zweier Elektroschränke und Elektroschrank zur Aufnahme von Elektroinstallationsgeräten**

(30) Priorität: 07.07.2009 DE 102009032055
(71) Anmelder: Siemens Aktiengesellschaft, 80333 München (DE)
(72) Erfinder: Kandlbinder, Max, 93142, Maxhütte-Haidhof (DE)

(57) **Zusammenfassung**

Die erfindungsgemäße Anordnung zum Verbinden zweier Elektroschränke weist einen ersten Elektroschrank (1) mit einer ersten Seitenwand (2) sowie einen zweiten Elektroschrank (11) mit einer der ersten Seitenwand (2) gegenüberliegenden zweiten Seitenwand (12) auf. Dabei weisen die erste Seitenwand (2) des ersten Elektroschranks (1) sowie die zweite Seitenwand (12) des zweiten Elektroschranks (11) jeweils einen Verbindungsbereich auf, wobei die beiden Verbindungsbereiche der beiden Elektroschränke (1, 11) hinsichtlich ihrer relativen Lage zueinander korrespondieren und derart ausgestaltet sind, dass durch die beiden Verbindungsbereiche die Elektroschränke (1, 11) über ihre Seiten miteinander formschlüssig verbindbar sind. Durch die formschlüssige Verbindung an den zueinander benachbart angeordneten Seitenwänden (2, 12) wird eine deutlich verbesserte Stabilität der Anordnung erreicht.

## Beschreibung

Die vorliegende Erfindung betrifft eine Anordnung zum Verbinden zweier Elektroschränke, insbesondere zweier Schalt- oder Verteilerschränke, welche zur Aufnahme von Elektroinstallationsgeräten ausgebildet sind. Ferner betrifft die Erfindung einen Elektroschrank, insbesondere einen Schalt- oder Verteilerschrank, zur Aufnahme von Elektroinstallationsgeräten.

Ein Elektroschrank dient der Aufnahme elektrischer und elektronischer Komponenten einer Anlage, beispielsweise einer einzelnen Maschine, einer Fertigungsanlage oder eines Gebäudes. Im einfachsten Fall beinhaltet er nur Klemmen zum übersichtlichen elektrischen Verbinden verschiedener Komponenten der Anlage und schützt diese vor äußeren Einflüssen wie beispielsweise Staub oder Feuchtigkeit oder äußerer mechanischer Krafteinwirkung. Im Inneren des Elektroschranks sind im Allgemeinen Halterungen zur Strukturierung des Innenaufbaus sowie Stromführungssysteme zum Anschluss der elektrischen und/oder elektronischen Komponenten vorgesehen. Elektroschränke werden - je nach Anwendung - aus lackiertem Stahlblech, Kunststoff oder Aluminiumblech in verschiedenen Bauformen, beispielsweise als Hänge- oder Stand-Elektroschrank, gefertigt. Für größere Anlagen werden sog. Anreih-Elektroschränke eingesetzt, um alle elektrischen und/oder elektronischen Komponenten aufnehmen zu können. Diese Anreih-Elektroschränke bestehen aus Schrank-Einzelelementen ohne Seitenwände, so dass Kabel und Leitungen intern durch Verbindungsöffnungen über die Elemente hinweg verlegt werden können. An den Enden eines derart zusammengefügten Elektroschranks können abschließende Seitenwände angebracht werden. Zur Erhaltung bestimmter Schutzartklassen ist zwischen den zu verbindenden Schränken eine zusätzliche Dichtung erforderlich, da der an den Verbindungsöffnungen vorhandene Anpressdruck oftmals zu gering ist.

Eine klassische Verbindung zur Fixierung der einzelnen aneinander gereihten Schaltschränke stellt eine durchgängige Schraube-Mutter-Verbindung dar. Hierbei ist es jedoch erforderlich, dass Zugang zu beiden Seiten der aneinander zu fügenden Bauteile möglich ist, andernfalls sind derartige Schraube-Mutter-Verbindungen nicht einsetzbar. Selbst in Fällen, in denen eine Schraube-Mutter-Verbindung möglich ist, sind die Verschraubungsstellen meist schlecht zugänglich, was eine umständliche und zeitaufwändige Montage mit sich bringt.

Es ist deshalb die Aufgabe der vorliegenden Erfindung, einen Elektroschrank zur Aufnahme von Elektroinstallationsgeräten sowie eine Anordnung zum Verbinden zweier Elektroschränke bereitzustellen, welche sich durch eine einfach zu montierende Verbindung aneinander fixieren lassen und eine verbesserte Stabilität aufweisen.

Diese Aufgabe wird durch den Elektroschrank zur Aufnahme von Elektroinstallationsgeräten sowie die Anordnung zum Verbinden zweier Elektroschränke gemäß den unabhängigen Ansprüchen gelöst. Vorteilhafte Ausgestaltungen sind Gegenstand der abhängigen Ansprüche.

Die erfindungsgemäße Anordnung zum Verbinden zweier Elektroschränke weist einen ersten Elektroschrank mit einer ersten Seitenwand sowie einen zweiten Elektroschrank mit einer der ersten Seitenwand gegenüberliegenden zweiten Seitenwand auf. Dabei weisen die erste Seitenwand des ersten Elektroschranks sowie die zweite Seitenwand des zweiten Elektroschranks jeweils einen Verbindungsbereich auf, wobei die beiden Verbindungsbereiche der beiden Elektroschränke hinsichtlich ihrer relativen Lage zueinander korrespondieren und derart ausgestaltet sind, dass durch die beiden Verbindungsbereiche die Elektroschränke über ihre Seiten miteinander formschlüssig verbindbar sind.

Die formschlüssige Verbindung der beiden Elektroschränke über die zueinander benachbart angeordneten Seitenwände führt zu einer deutlich verbesserten Stabilität der Anordnung.

In einer vorteilhaften Weiterbildung der Anordnung sind die beiden Verbindungsbereiche der Elektroschränke für eine feste aber lösbare Verbindung ausgestaltet.

Hieraus ergibt sich der Vorteil, dass die beiden Elektroschränke der Anordnung nicht nur auf einfache Weise montierbar, sondern auch auf ebenso einfache Weise wieder demontierbar sind. Als mögliche Verbindungsart kommen beispielsweise Haken-Öse-Verbindungen oder auch Verbindungslaschen in Betracht.

In einer weiteren vorteilhaften Weiterbildung der Anordnung sind die Verbindungsbereiche als zusammenwirkende Aussparungen ausgebildet.

Unter einer Aussparung wird eine Öffnung im Bereich eines Verbindungsbereichs einer Seitenwand verstanden. Die betreffende Seitenwand kann beispielsweise eine Vorprägung aufweisen, so dass die Aussparungen durch Ausbrechen oder Herausschlagen des durch die Vorprägung markierten Bereichs bei der Montage der Anordnung erzeugt werden kann. Weisen beide Verbindungsbereiche eine Öffnung, also eine Aussparung auf, welche einander gegenüberliegend angeordnet sind, so ist es möglich, diese Aussparung zur Durchführung von Leitungen, von Stromführungssystemen wie beispielsweise Sammelschienen, oder von mechanischen Halterungen zu nutzen. Somit sind keine zusätzlichen Öffnungen zur Durchführung von Kabeln oder Leitungen in den Seitenwänden der Elektroschränke erforderlich.

In einer weiteren vorteilhaften Weiterbildung der Anordnung weist ein Randbereich der Aussparung in der ersten Seitenwand eine kragenartige erste Anformung auf, welche nach innen gezogen ist. Ein Randbereich der Aussparung in der zweiten Seitenwand weist eine negativ geformte, kragenartige zweite Anformung auf, welche nach außen gezogen ist und mit der kragenartigen ersten Anformung derart zusammenwirkt, dass die erste und die zweite Seitenwand formschlüssig verbindbar sind.

Beim Aneinanderreihen der beiden Elektroschränke trifft dabei die erste Seitenwand mit der nach innen gezogenen ersten Anformung auf die zweite Seitenwand des zweiten Elektroschranks mit der nach außen gezogenen zweiten Anformung. Beim Zusammenschieben der Elektroschränke fügen sich die beiden konisch ausgebildeten Anformungen formschlüssig ineinander, womit zugleich eine Abdichtung der Übergangsstelle zumindest für die Schutzart IP43 bewirkt wird, so dass hierbei keine zusätzliche Dichtung zwischen den Verteilern benötigt wird. Der Formschluss besteht dabei in einer Ebene parallel zur Ebene der Seitenwände, so dass eine Relativbewegung der beiden Elektroschränke parallel zur Ebene der ersten bzw. der zweiten Seitenwand unterbunden wird.

Die kragenartigen Anformungen haben ferner den Vorteil, dass sie auf einfache Art und Weise herstellbar sind: Beispielsweise kann eine der Seitenwände über ein Tiefziehverfahren entsprechend geformt werden. Die Aussparungen können gleichzeitig oder in einem unmittelbar anschließenden, weiteren Verfahrensschritt mit Hilfe desselben Tiefziehwerkzeugs in die tiefgezogene Fläche geschnitten werden. Es ist selbstverständlich ebenfalls möglich, auf jeder der beiden Seitenwände mehrerer derartiger konisch ausgebildeter Anformungen zum Verbinden der beiden Elektroschränke anzuordnen.

In einer weiteren vorteilhaften Weiterbildung der Anordnung sind die Verbindungsbereiche mit Hilfe eines Verbindungselements aneinander fixierbar.

Auf diese Weise wird verhindert, dass sich die formschlüssige Verbindung in Richtung ihrer Fügerichtung wieder lösen kann. Ein Auseinanderrutschen der beiden Elektroschränke senkrecht zur Ebene der Seitenwände ist damit nicht mehr möglich.

In einer weiteren vorteilhaften Weiterbildung der Anordnung ist das Verbindungselement elektrisch leitend ausgebildet, so dass beide Schaltschränke gleiches Potential aufweisen.

Auf diese Weise wird sichergestellt, dass an den Gehäusen der beiden Schaltschränke die gleiche Spannung anliegt. Zur Erdung der gesamten Anordnung ist damit nur noch eine einzige gemeinsame Erdungsleitung erforderlich.

In einer weiteren vorteilhaften Weiterbildung der Anordnung ist das Verbindungselement an den einander gegenüber liegenden Aussparungen befestigbar, um die beiden Schaltschränke zu fixieren.

Bei der Montage befinden sich die Aussparungen im Inneren des jeweiligen Elektroschranks und sind somit für einen Monteur leicht zugänglich. Die Montage der Anordnung kann somit einfacher und schneller ausgeführt werden, als dies beim Anbringen von Verbindungselementen im Sockel oder im Deckelbereich der Anordnung möglich wäre. Hierzu können beispielsweise Klemmelemente verwendet werden, welche im Bereich der einander gegenüberliegenden Aussparungen befestigt werden und die beiden aneinanderliegenden Seitenwände der beiden Elektroschränke gegeneinander drücken.

In einer weiteren vorteilhaften Weiterbildung der Anordnung ist das Verbindungselement als Verbindungsstift, als Schraube oder als Niete ausgebildet.

Stift-, Schraub- oder Nietverbindungen stellen gängige, einfach zu montierende Verbindungsarten zum formschlüssigen Verbinden der beiden Elektroschränke dar. Bei Schraubverbindungen werden hierbei vorteilhafter Weise gewindefurchende Schrauben verwendet, um trotz einer eventuell vorhandenen Lackierung eine elektrisch leitende Verbindung zwischen den beiden Schaltschränke und damit gleiches elektrisches Potential an den beiden Schaltschränken zu erreichen. Im Fall der Nietverbindungen sind von Hand montierbare Nieten besonders vorteilhaft.

In einer weiteren vorteilhaften Weiterbildung der Anordnung ist der Verbindungsstift konisch ausgestaltet, um über eine Pressung beide Schaltschränke zu fixieren.

Vorteilhafterweise weisen hierzu die kragenartigen Anformungen der ersten und zweiten Seitenwand deckungsgleiche Öffnungen oder Bohrungen auf, durch die die konisch verlaufenden Metallstifte bei der Montage gedrückt werden. Dadurch werden die beiden Elektroschränke nochmals stärker zueinander gezogen.

In einer weiteren vorteilhaften Weiterbildung der Anordnung weist der erste Elektroschrank eine weitere erste Seitenwand auf, die einen weiteren Verbindungsbereich beinhaltet, um einen weiteren Schaltschrank formschlüssig anzukoppeln.

Damit kann die bisher aus zwei Schaltschränken bestehende Anordnung um einen weiteren Schaltschrank erweitert werden. Der mittlere der dann drei in Reihe angeordneten Schaltschränke weist dann sowohl an der ersten Seitenwand als auch an der der ersten Seitenwand gegenüberliegenden weiteren ersten Seitenwand einen Verbindungsbereich auf, um sowohl links als auch rechts einen Schaltschrank formschlüssig ankoppeln zu können. Ist der Verbindungsbereich als Aussparung mit den bereits beschriebenen Anformungen ausgebildet, so können diese Anformungen an der weiteren ersten Seitenwand sowohl nach außen als auch nach innen gezogen sein. Sollte eine Anordnung jedoch aus mehr als drei Schaltschränken bestehen, so ist es im Sinne eines Gleichteilekonzeptes sinnvoll, die erste Seitenwand des mittleren, ersten Elektroschranks mit einer kragenartigen nach innen gezogenen ersten Anformung auszubilden und die weitere erste Seitenwand mit einer kragenartigen nach außen gezogenen, weiteren ersten Anformung auszubilden. Somit weisen alle mittleren Schaltschränke einer Anordnung in jeweils einer der Seitenwände eine kragenartige nach innen gezogene Anformung und in der jeweils anderen Seitenwand eine kragenartig nach außen gezogene Anformung aus. Die Erweiterbarkeit der Anordnung um weitere Schaltschränke ist dabei ohne weitere Bauteile möglich.

In einer weiteren vorteilhaften Weiterbildung der Anordnung ist der als Aussparung ausgebildete Verbindungsbereich mittels eines Verschlusselements verschließbar.

Beliebig modular erweiterbare Schaltschränke weisen in beiden Seitenwänden Verbindungsbereiche mit entsprechenden Aussparungen zum Durchführen von Sammelschienen oder Leitungen auf. Werden diese nicht benötigt, weil der betreffende Schaltschrank den Anfang oder das Ende der Anordnung bildet, und somit die betreffende Seitenwand eine äußere Seitenwand der Anordnung darstellt, so können diese Aussparungen mit Hilfe des Verschlusselements auf einfache Art und Weise verschlossen werden, um den Vorschriften der jeweiligen Schutzklassenart gerecht zu werden. Als Verschlusselemente sind beispielsweise aufsteckbare oder aufschraubbare oder Verschluss- oder Schutzkappen vorstellbar. Es ist jedoch ebenso möglich, die in einer Seitenwand ausgebildeten Aussparungen mit Hilfe einer separaten, aufschraubbaren oder anderweitig befestigbaren zusätzlichen Seitenwand zu verschließen.

In einer weiteren vorteilhaften Weiterbildung der Anordnung sind die Elektroschränke als Schaltschränke oder Verteilerschränke ausgebildet.

Im Bereich der Industrie- oder Gebäudetechnik werden derartige Elektroschränke auch als Schaltschrank oder Verteilerschrank bezeichnet. Diese beherbergen diejenigen elektrischen und elektronischen Komponenten der jeweiligen Anlage (beispielsweise einer Werkzeugmaschine oder einer verfahrenstechnischen Anlage), die sich nicht direkt in der betreffenden Maschine befinden.

Der erfindungsgemäße Elektroschrank zur Aufnahme von Elektroinstallationsgeräten weist eine Anordnung nach einem der Ansprüche 1 bis 12 auf.

Hinsichtlich der Vorteile des erfindungsgemäßen Elektroschranks wird auf die Ausführungen zu der erfindungsgemäßen Anordnung zum Verbinden zweier Elektroschränke verwiesen.

Im Folgenden werden Ausführungsbeispiele der Anordnung unter Bezug auf die beigefügten Figuren näher erläutert. In den Figuren sind:
- Figuren 1a und 1b: jeweils eine schematische Darstellung der ersten bzw. zweiten Seitenwand des ersten bzw. zweiten Elektroschranks,
- Figuren 2a und 2b: jeweils eine schematische Darstellung der Anord- nung, bestehend aus dem ersten und dem zweiten Elektroschrank, in zwei Montageschritten.

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

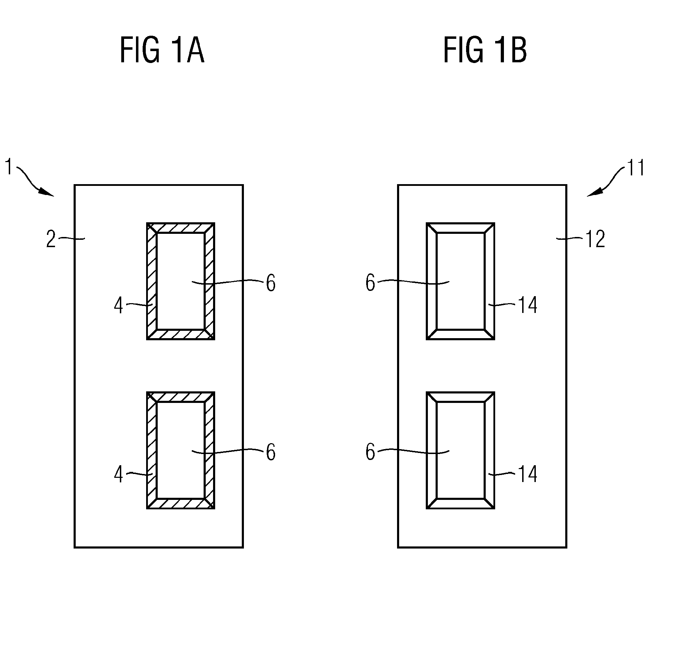

In den Figuren 1a und 1b ist jeweils die erste Seitenwand 2 bzw. die zweite Seitenwand 12 des ersten Elektroschranks 1 bzw. zweiten Elektroschranks 2 schematisch dargestellt. Fig. 1a zeigt die erste Seitenwand 2 des ersten Elektroschranks 1. Zum formschlüssigen Verbinden mit dem zweiten Elektroschrank 11 weist die erste Seitenwand 2 zwei Verbindungsbereiche mit jeweils einer Aussparung 6 auf. Der Randbereich der Aussparungen 6 weist dabei jeweils eine kragenartige erste Anformung 4 auf, welche konisch nach innen, d.h. in das Innere des ersten Schaltschranks 1 gezogen ist. Fig. 1b zeigt die zweite Seitenwand 12 des zweiten Elektroschranks 11. Diese weist ebenfalls zwei Verbindungsbereiche mit jeweils einer Aussparung 6 auf, wobei die beiden Aussparungen 6 in der zweiten Seitenwand 12 jeweils eine kragenartige zweite Anformung 14 aufweisen, welche konisch nach außen gezogen ist. Die Verbindungsbereiche mit den Aussparungen 6 sind auf den Seitenwänden 2 und 12 jeweils derart angeordnet, dass sie hinsichtlich ihrer relativen Lage miteinander korrespondieren, sobald der erste Elektroschrank 1 und der zweite Elektroschrank 11 zu einer gemeinsamen Anordnung zusammengeführt werden.

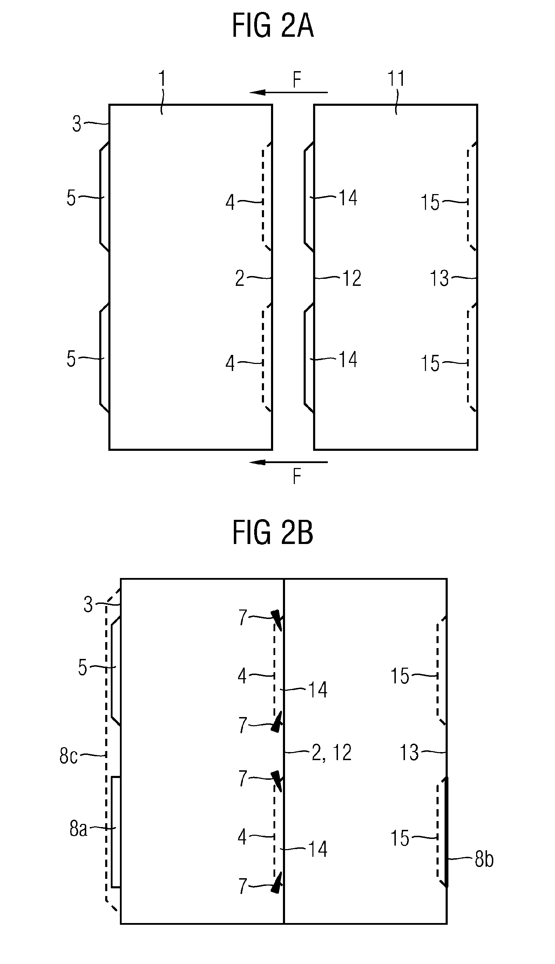

In den Figuren 2a und 2b ist die Anordnung, welche aus dem ersten Elektroschrank 1 und dem zweiten Elektroschrank 11 besteht, in zwei Montageschritten dargestellt. Figur 2a zeigt die beiden Elektroschränke 1 und 11, die nebeneinander, aber mit einem gewissen Abstand zueinander aufgestellt sind. Dies entspricht einem Zustand vor der endgültigen Montage zu einer gemeinsamen Anordnung. Hier wird bereits deutlich, dass die an der ersten Seitenwand 2 angeordneten Verbindungsbereiche mit den Verbindungsbereichen der zweiten Seitenwand hinsichtlich ihrer relativen Lage korrespondieren. Der erste Elektroschrank weist ferner eine weitere erste Seitenwand 3 mit weiteren Verbindungsbereichen auf, welche zum formschlüssigen Ankoppeln eines weiteren Schaltschranks vorgesehen ist. Die weiteren Verbindungsbereiche weisen ebenfalls Aussparungen 6 mit kragenartigen Anformungen 4 auf, welche jedoch im Gegensatz zu den kragenartigen Anformungen 6 der ersten Seitenwand 2 nach außen gezogen sind. Ebenso weist der zweite Elektroschrank eine weitere zweite Seitenwand 13 auf mit weiteren Verbindungsbereichen auf. Diese weisen wiederum Aussparungen 6 mit weiteren kragenartigen zweiten Anformungen 15 auf, welche im Gegensatz zu den kragenartigen zweiten Anformungen 14 nach innen, d.h. ins Innere des zweiten Elektroschranks 2 gezogen sind. Somit entspricht der Aufbau des zweiten Elektroschranks 2 dem Aufbau des ersten Elektroschranks 1. Hieraus ergibt sich der Vorteil, dass bei einem Aneinanderreihen weiterer Elektroschränke stets gleich aufgebaute Elektroschränke verwendet werden können, so dass die Variantenvielfalt in Produktion und Logistik deutlich reduziert werden kann.

Die fertig montierte Anordnung ist in Figur 2b dargestellt. In dieser Darstellung wird deutlich, dass die Aussparungen 6 mit den kragenartigen, nach innen gezogenen ersten Anformungen 4, welche in der ersten Seitenwand 2 des ersten Elektroschranks 1 ausgebildet sind, hinsichtlich ihrer Lage derart mit den kragenartigen, nach außen gezogenen zweiten Anformungen 14, welche in der zweiten Seitenwand 12 des zweiten Elektroschranks 11 ausgebildet sind, korrespondieren, dass beim Zusammenschieben der beiden Elektroschränke 1 und 11 die nach außen gezogenen Anformungen 14 der zweiten Seitenwand 12 in die nach innen gezogenen Anformungen 4 der ersten Seitenwand 2 tauchen. Auf diese Weise ist ein Formschluss realisierbar, welcher eine Relativbewegung der beiden Elektroschränke 1 und 11 in einer Ebene parallel zur Ebene der ersten bzw. zweiten Seitenwand 2 bzw. 12 verhindert.

Um ein Auseinanderrutschen der beiden Elektroschränke 1 und 11 in Fügerichtung F, d.h. senkrecht zur Ebene der Seitenwände 2 bzw. 12, zu verhindern, sind Verbindungselemente 7 vorgesehen, mit deren Hilfe die Verbindungsbereiche der beiden Seitenwände 2 und 12 miteinander verbunden werden. In Figur 2b sind die Verbindungselemente 7 als konischer zulaufende Metallstifte ausgebildet, welche durch im Bereich der kragenartigen ersten und zweiten Anformungen 4 bzw. 14 ausgebildete, durchgängige Bohrungen in den Seitenwänden 2 und 12 gesteckt wird. Durch den elektrisch leitenden Metallstift wird eine elektrisch leitende Verbindung zwischen den beiden Seitenwänden geschaffen, so dass die beiden Schaltschränke 1 und 11 gleiches Potential aufweisen.

Diejenigen Aussparungen 6, welche an den äußeren Seitenwänden 3 bzw. 13 der Anordnung ausgebildet sind, können, sofern sie nicht zum formschlüssig ankoppeln eines weiteren Schaltschranks benötigt werden, mit Hilfe von Verschlusselementen 8 verschlossen werden, um den Vorschriften der jeweiligen Schutzklassenart gerecht zu werden. Als Verschlusselemente sind beispielsweise aufsteckbare oder aufschraubbare oder Verschluss- oder Schutzkappen verwendbar. Es ist jedoch ebenso möglich, die in einer Seitenwand ausgebildeten Aussparungen mit Hilfe einer separaten, aufschraubbaren oder anderweitig befestigbaren zusätzlichen Seitenwand 8c zu verschließen. In der Darstellung der Figur 2b ist die untere der beiden nach außen gezogenen, weiteren kragenartigen ersten Anformungen mittels einer Schutzkappe 8a verschlossen. Die nach innen gezogene, weitere kragenartige zweite Anformung 15, welche in der weiteren zweiten Seitenwand 13 des zweiten Elektroschranks 11 ausgebildet ist, ist mit Hilfe eines einfachen, aufsteck- oder aufschraubbaren Deckels 8b verschlossen. Ferner ist eine zusätzliche Seitenwand 8c, welche an dem ersten Elektroschrank befestigt ist, strichliert dargestellt. Damit soll angedeutet werden, dass alternativ zu der verwendeten Schutzkappe 8a auch eine zusätzliche Seitenwand 8c zum Verschließen der Aussparung 6 verwendet werden kann. Eine derartige zusätzliche Seitenwand 8c kann auch zum Verschließen der Aussparungen 6 in der weitere zweite Seitenwand 13 verwendet werden.

### Bezugszeichenliste

- 1: erster Elektroschrank
- 2: erste Seitenwand
- 3: weitere erste Seitenwand
- 4: kragenartige erste Anformung
- 5: weitere kragenartige erste Anformung
- 6: Aussparung
- 7: Verbindungselement
- 8: Verschlusselement
8a Schutzkappe
8b Deckel
8c zusätzliche Seitenwand

- 11: zweiter Elektroschrank
- 12: zweite Seitenwand
- 13: weitere zweite Seitenwand
- 14: kragenartige zweite Anformung
- 15: weitere kragenartige zweite Anformung

- F: Fügerichtung

## Patentansprüche

1. Anordnung zum Verbinden zweier Elektroschränke, welche zur Aufnahme von Elektroinstallationsgeräten ausgebildet sind,
- mit einem ersten Elektroschrank (1), der eine erste Seitenwand (2) aufweist,
- mit einem zweiten Elektroschrank (11), der eine der ersten Seitenwand (2) des ersten Elektroschranks (1) gegenüberliegende zweite Seitenwand (12) aufweist, **dadurch gekennzeichnet,**
- **dass** die erste Seitenwand (2) des ersten Elektroschranks (1) einen Verbindungsbereich aufweist,
- **dass** die zweite Seitenwand (12) des zweiten Elektroschranks (11) einen Verbindungsbereich aufweist,
- **dass** die Verbindungsbereiche der beiden Elektroschränke (1, 11) hinsichtlich ihrer relativen Lage zueinander korrespondieren und derart ausgestaltet sind, dass durch die beiden Verbindungsbereiche die Elektroschränke (1, 11) über ihre Seiten miteinander formschlüssig verbindbar sind.

2. Anordnung nach Anspruch 1,
**dadurch gekennzeichnet,**
**dass** beiden Verbindungsbereiche der Elektroschränke (1, 11) für eine feste aber lösbare Verbindung ausgestaltet sind.

3. Anordnung nach einem der Ansprüche 1 oder 2,
**dadurch gekennzeichnet,**
**dass** die Verbindungsbereiche als zusammenwirkende Aussparungen (6) ausgebildet sind.

4. Anordnung nach Anspruch 3,
**dadurch gekennzeichnet,**
- **dass** ein Randbereich der Aussparung (6) in der ersten Seitenwand (2) eine kragenartige erste Anformung (4) aufweist, welche nach innen gezogen ist,
- **dass** ein Randbereich der Aussparung (6) in der zweiten Seitenwand (12) eine negativ geformte, kragenartige zweite Anformung (14) aufweist, welche nach außen gezogen ist und mit der kragenartigen ersten Anformung (4) derart zusammenwirkt, dass die erste und die zweite Seitenwand (2, 12) formschlüssig verbindbar sind.

5. Anordnung nach einem der Ansprüche 1 bis 4,
**dadurch gekennzeichnet,**
**dass** die Verbindungsbereiche mit Hilfe eines Verbindungselements (7) aneinander fixierbar sind.

6. Anordnung nach Anspruch 5,
**dadurch gekennzeichnet,**
**dass** das Verbindungselement (7) elektrisch leitend ausgebildet ist, so dass beide Schaltschränke (1, 11) gleiches Potential aufweisen.

7. Anordnung nach einem der Ansprüche 5 oder 6,
**dadurch gekennzeichnet,**
**dass** das Verbindungselement (7) an den einander gegenüber liegenden Aussparungen (6) befestigbar ist, um die beiden Schaltschränke (1, 11) zu fixieren.

8. Anordnung nach einem der Ansprüche 5 bis 7,
**dadurch gekennzeichnet,**
**dass** das Verbindungselement (7) als Verbindungsstift, als Schraube oder als Niete ausgebildet ist.

9. Anordnung nach Anspruch 8,
**dadurch gekennzeichnet,**
**dass** der Verbindungsstift (7) konisch ausgestaltet ist, um über eine Pressung beide Schaltschränke zu fixieren.

10. Anordnung nach einem der Ansprüche 1 bis 9,
**dadurch gekennzeichnet,**
**dass** der erste Elektroschrank (1) eine weitere erste Seitenwand (3) aufweist, die einen weiteren Verbindungsbereich beinhaltet, um einen weiteren Schaltschrank formschlüssig anzukoppeln.

11. Anordnung nach einem der Ansprüche 3 bis 10,
**dadurch gekennzeichnet,**
**dass** der als Aussparung (6) ausgebildete Verbindungsbereich mittels eines Verschlusselements (8) verschließbar ist.

12. Anordnung nach einem der Ansprüche 1 bis 11,
**dadurch gekennzeichnet,**
**dass** die Elektroschränke (1, 11) als Schaltschränke oder Verteilerschränke ausgebildet sind.

13. Elektroschrank (1) zur Aufnahme von Elektroinstallationsgeräten mit einer Anordnung nach einem der Ansprüche 1 bis 12.
